# EUROPÄISCHE PATENTSCHRIFT

(11) **EP 3 415 287 B1**
(45) Veröffentlichungstag und Bekanntmachung des Hinweises auf die Patenterteilung: **06.09.2023**
(21) Anmeldenummer: 18180303.2
(22) Anmeldetag: 29.03.2012
(51) Int. Cl.: B25J 19/00, H02G 11/00

(54) **FÜHRUNGSSYSTEM FÜR VERSORGUNGSLEITUNGEN UND ROBOTER MIT FÜHRUNGSSYSTEM**
GUIDE SYSTEM FOR SUPPLY LINES AND ROBOT HAVING A GUIDE SYSTEM
SYSTÈME DE GUIDAGE POUR LIGNES D'ALIMENTATION ET ROBOT POURVU D'UN SYSTÈME DE GUIDAGE

(30) Priorität: 01.04.2011 DE 202011004786 U
(43) Veröffentlichungstag der Anmeldung: 19.12.2018
(62) Teilanmeldung aus: 12713668.7
(73) Patentinhaber: Igus GmbH, 51147 Köln (DE)
(72) Erfinder: Hermey, Andreas, 53773 Hennef (DE); Steeger, Ralf, 53797 Lohmar (DE)
(74) Vertreter: Lippert Stachow Patentanwälte Rechtsanwälte

(56) Entgegenhaltungen:
- DE-A1-102009 037 517
- DE-U1-202004 021 177
- JP-U- H02 100 793

## Beschreibung

Die Erfindung betrifft ein Führungssystem für Versorgungsleitungen für ein Handhabungsgerät, insbesondere für einen Industrieroboter, mit einer Basis und einem ketten- oder schlauchartigen Strang mit kreisförmigem Querschnitt, in oder an dem die Versorgungsleitungen anordenbar sind, wobei der Strang zum Längenausgleich in einem Ausgleichsabschnitt in zwei über einen Umlenkbogen miteinander verbundenen Trumen mit jeweils einem endseitigen Anschlusspunkt, einem zu der Basis des Führungssystems stationären ersten Anschlusspunkt und einem zu der Basis bewegbaren zweiten Anschlusspunkt, geführt angeordnet ist, der zweite Anschlusspunkt relativ zum ersten Anschlusspunkt über einen Verfahrweg zwischen einer Auslenkposition, in der der Strang ausgefahren ist, und einer Rückstellposition, in der Strang eingefahren ist, hin und her verfahrbar ist, wobei das Führungssystem eine Rückstellvorrichtung zur Rückstellung des Stranges in die Rückstellposition hinein aufweist, die eine Umlenkungsführung mit einem Umlenkelement aufweist, an dem sich der Umlenkbogen zu seiner Führung über den Verfahrweg seitlich abstützt, das Umlenkelement mit zumindest einer Wegkomponente in Richtung des Verfahrweges ortsveränderlich zur Basis zwischen der Auslenkposition und der Rückstellposition hin und her verfahrbar angeordnet ist und eine seitliche Führungsfläche für den Umlenkbogen aufweist, die sich zumindest etwa senkrecht zu einer Bogenebene erstreckt, in der der Umlenkbogen angeordnet ist.

Die Erfindung betrifft ferner ein Handhabungsgerät, insbesondere einen Industrieroboter, mit dem Führungssystem der vorstehend genannten Art.

Handhabungsgeräte, wie Industrieroboter, weisen beispielsweise an einem bewegbaren Arbeitsende ein Arbeitsgerät als Verbraucher auf, der über Versorgungsleitungen versorgt wird. In der Regel werden die Stränge mit den Versorgungsleitungen an der Struktur der der Roboter entlang geführt. Industrieroboter sind in der Regel für rasche und häufig sehr komplexe Bewegungsabläufe ausgelegt, welches eine besonders präzise Führung der Versorgungsleitungen an oder in dem Strang erfordert, um eine übermäßige Belastung des Stranges und damit der Versorgungsleitungen beispielsweise infolge von Verhakungen oder Verwicklungen an der Roboterstruktur oder Schlaufenbildung der des Stranges zu vermeiden. Dies kann zum Bruch des Stranges und damit der durch den Strang geführten Versorgungsleitung führen. Komplexe Bewegungsabläufe erfordern einen entsprechend großen Längenausgleich bei dem Strang, damit dieser den Bewegungsabläufen des Industrieroboters folgen kann. Im Stand der Technik wird vorgeschlagen, eine Teillänge des Stranges aus der Auslenkungsposition in die Rückstellposition mittels einer Rückstellvorrichtung zurückzubringen.

Die DE 10 2009 037 517 A1 offenbart ein Führungssystem der eingangs genannten Art zum Führen von Versorgungsleitungen an einem Industrieroboter mit einem längeren Ausgleichsabschnitt, das eine Linearführung und ein Rückstellmittel mit einer Drehfeder aufweist. Das Rückstellmittel wandelt das Drehmoment der Drehfeder in eine linear wirkende Kraft, die bei längeren Ausgleichsbewegungen der Versorgungsleitungen über ein linear bewegliches Führungselement der Linearführung auf die Versorgungsleitungen wirkt. Das Führungselement ist zur Umlenkung eines Schlauchs oder einer Gliederkette mit kreisförmigem Querschnitt als Formteil mit gebogener Führungsfläche für den Umlenkbogen des Schlauchs oder der Gliederkette und mit integrierten Rollen ausgebildet. Nachteilig hierbei ist eine erhöhte Belastung des als Schlauch oder Gliederkette ausgebildeten Stranges aufgrund dessen partieller Abgleitung auf der gebogenen Fläche des Formteils. Die in das Formteil integrierten kleinen Zylinderrollen vermindern die mechanische Belastung nur unwesentlich, wodurch jedoch die Konstruktion aufwändig wird. Ferner liegen die Zylinderrollen mechanisch ungünstig linienhaft am Umlenkbogen des Schlauchs oder der Gliederkette an und erstrecken sich zudem lediglich über einen Teilbereich der Führungsfläche, an der der Umlenkbogen seitlich anliegt.

Aus der JP H02100793U ist ein Führungssystem mit einer Rückstellvorrichtung zur Rückstellung eines Stranges in eine Rückstellposition hinein bekannt, die ein als Umlenkrolle ausgebildetes Umlenkelement aufweist, über das der Strang mit einem Umlenkbogen geführt ist. Die seitliche Führungsfläche der Umlenkrolle für den Umlenkbogen ist zylindermantelförmig mit seitlich radial an der Zylindermantelfläche vorstehenden Begrenzungsflächen ausgebildet.

In der WO 97/39505 A1 wird ein nicht gattungsgemäßes Führungssystem für einen Roboter mit bis zu sechs Freiheitsgraden beschrieben, bei dem der Strang an den Trumen und dem an dem Umlenkelement seitlich anliegenden Umlenkbogen gehalten wird, wobei das Umlenkelement notwendig nicht an der Basis geführt, sondern durch den Strang frei beweglich im Raum gehalten wird. Nachteilig ändern sich mit Verfahren des Stranges konstruktionsbedingt der von den Trumen eingeschlossene Winkel, die Fläche, in der der Umlenkbogen an dem Umlenkelement anliegt, und damit die auf den Strang einwirkenden Kräfte und Kraftmomente.

In der WO2005/123350A1 wird ein Führungssystem beschrieben, wobei zur Rückstellung eines Abschnittes des Stranges eine um den Strang wendelförmig angeordnete Feder in die Auslenkposition hinein ausgelenkt wird, die den Strang mit Zurückfahren des Roboters wieder in die Rückstellposition zurückzieht. Der maximal mögliche Längenausgleich wird durch die Differenz der Federlänge der Feder im entspannten und im zusammengedrückten Zustand der Feder bestimmt.

Bei einem Führungssystem gemäß der DE 20 2010 007 251 U1 greift die Rückstellvorrichtung aufwendig über ein federvorgespanntes Seil an einem als Anschlussstück ausgebildetem Kettenglied kraftwirksam an, um den dort kettenförmigen Strang innerhalb eines Gehäuses in die Rückstellposition hinein zurückzuziehen.

In der DE 10 2007 018 543 A1 wird der Strang vom erste Anschlusspunkt in einem Drehhebel radial nach außen zu einem Anschlusselement geführt, das mit Drehung des Drehhebels unter Abwicklung eines halbkreisförmigen Umlenkbogens auf einem Kreisbogen geführt wird. Zur Rückholung ist auch hier eine den Strang wendelförmig umschließende Feder vorgesehen. Nachteilig ist neben der Verdrillung der Leitungen im ersten Anschlusspunkt der relativ geringe mögliche Längenausgleich des Stranges.

Aufgabe der Aufgabe der Erfindung ist, ein einfach konstruiertes gattungsgemäßes Führungssystem bereitzustellen, mittels dessen ein ketten- oder schlauchartiger Strang mit kreisförmigem Querschnitt unaufwändig und sicher geführt werden kann, sowie eine stabile Lagerung der Umlenkrolle zu erzielen.

Die Aufgabe wird durch ein Führungssystem gemäß Anspruch 1 gelöst

Das Verfahren der Umlenkrolle und damit das Verfahren des an der Umlenkrolle anliegenden Umlenkbogens unter Einziehung des Stranges in seine Rückstellposition hinein kann, wie bereits bekannt, automatisch erfolgen. Wenn der durch die Versorgungsleitung versorgte Verbraucher an der Handmaschine bzw. an dem Roboter zurück verfährt, kann der Strang entsprechend freigegeben und über die Rückstellvorrichtung in Richtung seiner Rückstellposition zurück gezogen werden. Dies könnte im Prinzip vorzugsweise geregelt mittels eines motorischen Antriebes, wie mittels eines Linearantriebes oder eines Stellmotors, erfolgen. Bevorzugt wird jedoch eine automatische Rückstellung über eine in die Umlenkrolle eingeleitete Rückstellkraft einer Kraftvorrichtung. Hierbei kann die Kraftvorrichtung so ausgelegt sein, dass die erzeugte Rückstellkraft beispielsweise über den von dem Verbraucher auf den Strang ausgeübte Zugkraft gesteuert oder vorzugsweise geregelt wird. Damit kann der Strang zu dem Verbraucher hin in einer vorzugsweise konstanten Zugspannung gehalten werden, so dass ein unzulässiges Durchhängen des Stranges vermieden werden kann.

Die Kraftvorrichtung kann auf verschiedenste Weise die erforderliche Rückstellkraft erzeugen und in die Umlenkrolle einleiten. Dieses kann beispielsweise pneumatisch, magnetisch, elektromagnetisch und/oder mechanisch, hier insbesondere federmechanisch, erfolgen. Hierzu kann beispielsweise eine pneumatische, magnetische und/oder mechanische Feder eingesetzt werden, die vorzugsweise unmittelbar oder über eine Kraftübersetzung, wie Hebelanordnung oder Getriebe, auf die Umlenkrolle kraftwirksam einwirkt.

In einer bevorzugten Ausbildung des Führungssystems ist vorgesehen, dass die Umlenkrolle unter Vorspannung in der Rückstellposition angeordnet ist, wobei die Vorspannung zumindest mit einer Richtungskomponente in Richtung der Rückstellkraft weist. Damit kann der Umlenkbogen im Umfange der wirkenden Vorspannung in der Rückholposition lagefixiert werden. Der Einsatz einer rein mechanischen Feder zur Erzeugung der Rückstellkraft hat den Vorteil, dass dieses einfach und mechanisch robust bewerkstelligbar ist.

Wird beispielsweise die Rückstellkraft auf pneumatischem Wege, d.h. mittels eines Druckzylinders mit ausfahrendem Druckkolben erzeugt, so kann diese pneumatisch erzeugte Rückstellkraft unaufwändig gesteuert und geregelt werden. Dies hat den Vorteil, dass damit die Rückstellkraft vorteilhaft konstant gehalten werden kann. Es kann somit die gesamte Bewegung der Umlenkrolle über die Höhe und/oder Änderung der Rückstellkraft gesteuert oder geregelt werden. Ferner kann über hierüber der Weg der Umlenkrolle begrenzt werden, so dass entsprechende mechanische Endanschläge überflüssig sind.

Zur Erfassung der Rückstellkraft, der Ortsveränderung der Umlenkrolle und/oder eines Anpressdruckes, mit dem der Umlenkbogen an der Umlenkrolle anliegt, kann zumindest ein Sensor einer Messvorrichtung vorgesehen sein. Hierdurch kann einerseits das Verfahren des Rückstellelementes, abhängig von dem jeweiligen Einsatzort des Führungssystems, optimiert werden. So kann beispielsweise bei Änderung des komplizierten Bewegungsablaufes, insbesondere bei einer Änderung der Verfahrgeschwindigkeit des Verbrauchers, entsprechend die Rückstellkraft über den Verfahrweg eingestellt werden. Ferner können hierüber Endpunkte des Verfahrweges der Umlenkrolle über die Steuerung der Rückstellkraft wahlweise eingestellt werden. Ferner kann über die Sensoren, wie beispielsweise bei einem Abriss des Stranges am Verbraucher, der dadurch höchstens stark verminderte Zugkraft auf die Umlenkrolle ausübt, unmittelbar auf das Handhabungsgeräte bzw. den Industrieroboter so eingewirkt werden, dass dieser automatisch abschaltet. Wird beispielsweise ein Gegenstand unzulässig zwischen Strang und Handhabungsgerät derart, dass der Strang hierdurch weiter gespannt wird und somit eine erhöhte Zugkraft auf die Umlenkrolle ausübt, so kann auch über die sensorische Ermittlung beispielsweise des Anpressdruckes, mit dem der Umlenkbogen an der Umlenkrolle anliegt, eine Notausschaltung des Handhabungsgerätes bzw. des Industrieroboters erfolgen. Die jeweiligen Sensoren zur die Erfassung der Rückstellkraft, der Ortsveränderung der Umlenkrolle und/oder des Anpressdruckes können, angepasst an die jeweilige Aufgabe, in üblicher Weise ausgebildet sein. Beispielsweise können zur Erfassung der Ortsveränderung der Umlenkrolle Positionssensoren für lineare Wegmessung oder Winkelsensoren der Winkelmessung bei bogenförmiger Ortsveränderung der Umlenkrolle vorgesehen sein. Demnach kann eine Messwertannahme translatorisch oder rotatorisch erfolgen. Hierbei können übliche Positionssensoren geeigneter Bauart in Frage kommen. Diese können beispielsweise lichtoptisch, kapazitiv, induktiv, magnet-induktiv, magneto-striktiv, elektrisch, beispielsweise nach dem Wirbelstromverfahren, oder magnetisch nach dem Halleffekt arbeiten. Dabei kann die Wegmessung als absolute Wegmessung von einem Nullpunkt ausgehen oder als inkrementale Wegmessung, was bevorzugt ist, lediglich die positiven oder negativen Zuwächse des zurückgelegten Weges messen.

Allgemein wird eine berührungslose Erfassung der Ortsveränderung der Umlenkrolle bevorzugt, wie sie beispielsweise auf kapazitive, induktive, magneto-induktive oder magneto-striktive Weise möglich ist. Besonders bevorzugt werden jedoch Potentiometer, d.h. Drehpotentiometer bei Erfassung einer Drehbewegung und Linearpotentiometer bei Erfassung einer lineare Bewegung. Hierbei wird jeweils eine inkrementale Wegmessung bevorzugt, da hierzu keine Nullpunktansteuerung vorgesehen ist.

Der Teil des Stranges, der nicht zu dem Ausgleichsabschnitt gehört, kann zusätzlich mittels zumindest eines weiteren Führungselementes abgestützt und geführt werden. Hierzu kann ein üblicher Führungsring mit Gleitreibung verringernder Beschichtung beispielsweise aus Teflon zum Einsatz kommen, durch den der Strang geführt gleitverschieblich angeordnet ist und der an der Außenstruktur des Handhabungsgerätes vorzugsweise einstellbar montiert ist.

Das Führungssystem kann ein Gehäuse mit Deckel zum Schutz aufweisen. Das Gehäuse kann die Basis als Gehäuseboden aufweisen, an den der Deckel klappbar angelenkt ist. Ferner können zur Montage an dem Handhabungsgerät vorzugsweise an der Basis Halterungsmittel vorgesehen sein.

Das Führungssystem kann somit als Modul mit dem Ausgleichsabschnitt, der Rückstellvorrichtung und der Kraftvorrichtung sowie eventuell mit der Messvorrichtung und Steuerungs- und Regelungseinheit vollständig vorgefertigt werden. Diese Module können in verschiedenen Ausführungen bevorratet werden. Damit kann beispielsweise zum Umrüsten des Handhabungsgerätes bez. des Industrieroboters ein modulares Führungssystem durch ein der Umrüstung angepasstes anderes Führungssystem ausgetauscht oder ergänzt werden. Es können Sets mit einzelnen Baugruppen des Führungssystems bereitgestellt werden. Es können einzelne oder alle Baugruppen vorteilhaft in unterschiedlichen Auslegungen in dem Set enthalten sein.

Die vorliegende Erfindung wird im Folgenden anhand eines in der Zeichnung dargestellten Ausführungsbeispiels des Führungssystems bzw. des Handhabungsgerätes mit dem Führungssystem näher erläutert. In der Zeichnung zeigen:
Figuren 1a und 1b sowie 2a und 2b jeweils eine Ansicht eines Ausführungsbeispiels des Führungssystems mit der Umlenkrolle in der Rückstellposition
Figuren 3a und 3b sowie 4a und 4b jeweils eine Ansicht des Ausführungsbeispiels des Führungssystems gemäß den Figuren 1 und 2, jedoch mit der Umlenkrolle in der Auslenkposition
Figuren 5a bis 5d jeweils eine Ansicht des Ausführungsbeispiels des Führungssystems gemäß den Figuren 3 und 4 und
Figuren 6a bis 6c jeweils eine Ansicht eines Industrieroboters mit dem Führungssystem gemäß Figuren 1 und 2.

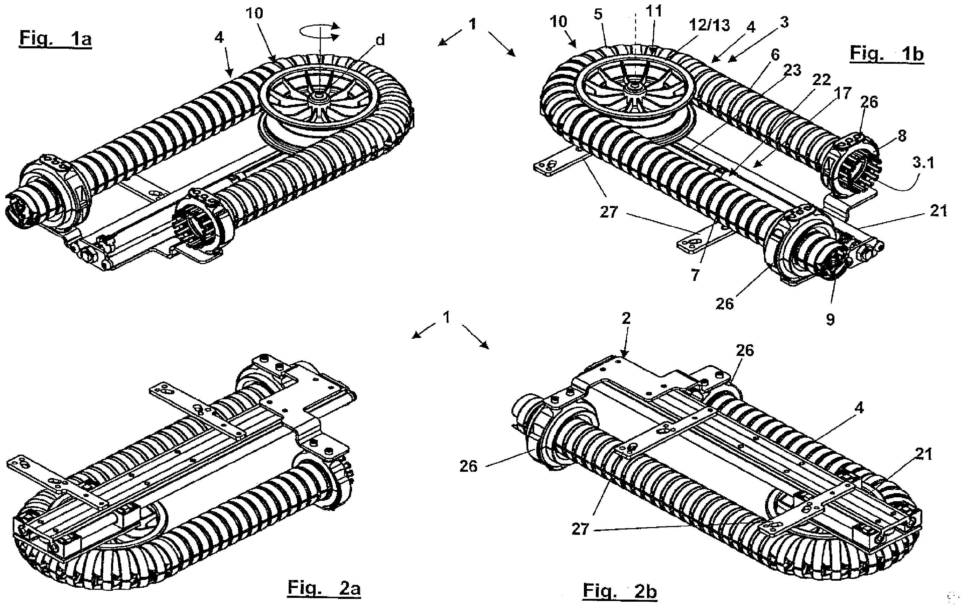

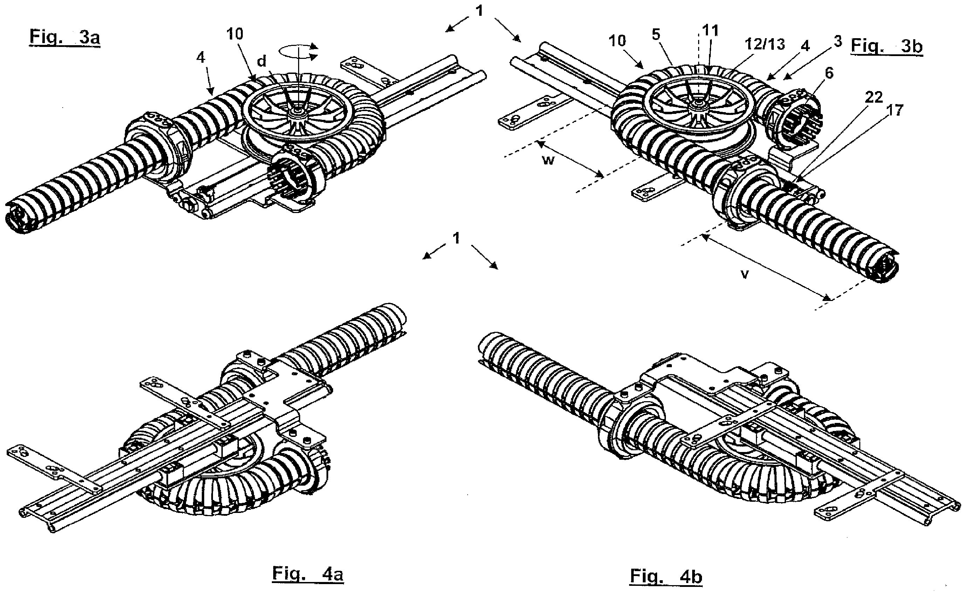

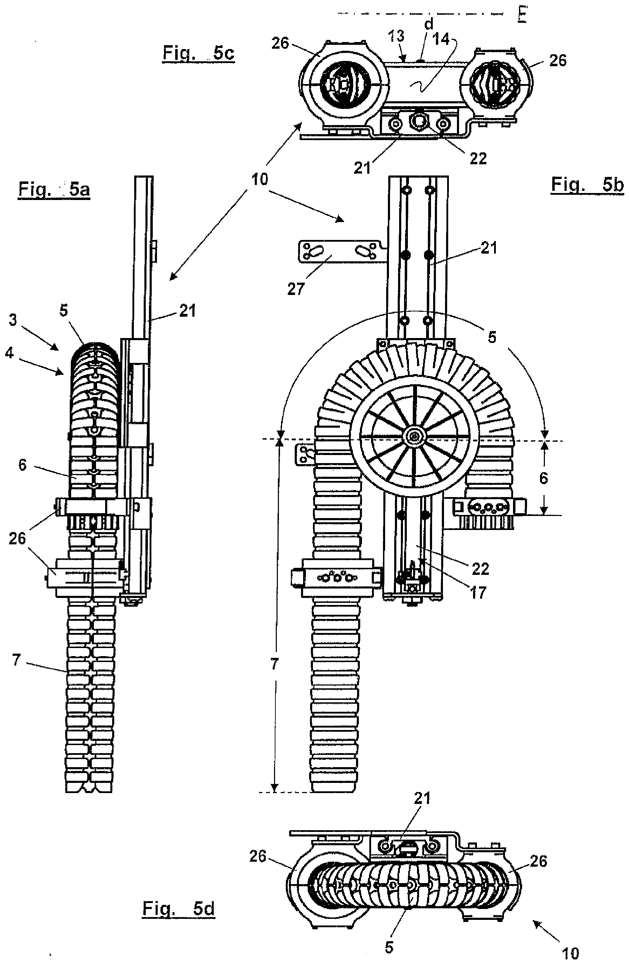

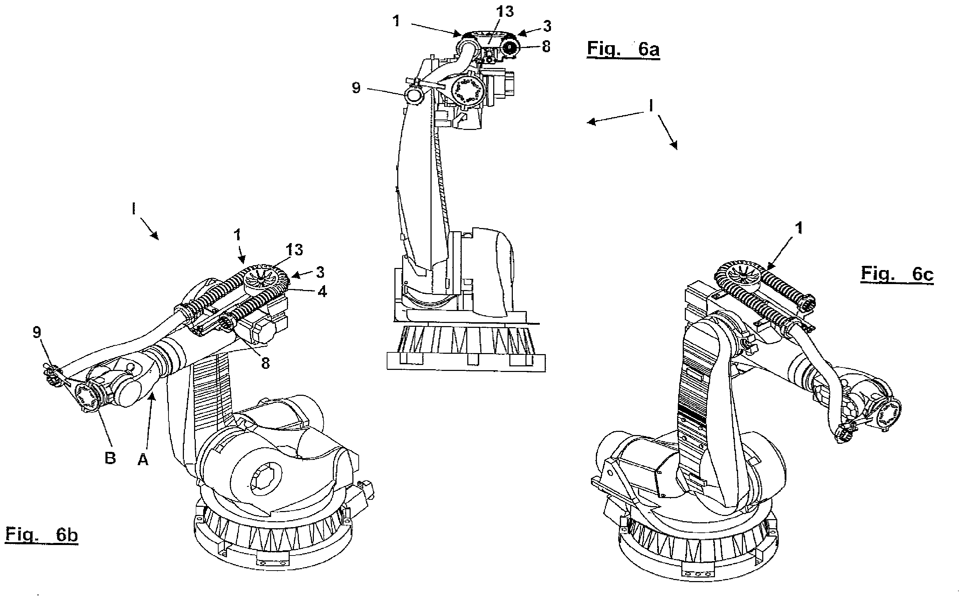

Das Führungssystem 1 ist für hier nicht weiter dargestellte Versorgungsleitungen für ein hier als Industrieroboter I ausgebildetes Handhabungsgerät ausgelegt. Das Führungssystem 1 weist hier eine hier plattenförmige Basis 2 und einen hier kettenförmigen Strang 3 mit kreisrundem Querschnitt und einem Innenraum 3.1 auf, in dem die hier nicht dargestellte Versorgungsleitungen anordenbar sind. Das Führungssystem 1 ist, wie in den Figuren 6a-c verdeutlicht, hier ausgelegt, Versorgungsleitungen über den Strang 3 zu einem hier nicht dargestellten, am Ende eines Armes A des Industrieroboter I angeordneten Verbrauchers hinzuführen, wobei der Arm A bezüglich seiner Länge veränderbar ist. Zum Längenausgleich ist der Strang 3 in einem hier allein den Strang 3 darstellenden Ausgleichsabschnitt 4 in zwei über einen Umlenkbogen 5 miteinander verbundenen Trumen 6, 7 mit jeweils einem endseitigen Anschlusspunkt, einen zu der Basis 2 des Führungssystems 1 stationärem ersten Anschlusspunkt 8 und einem zu der Basis 2 bewegbaren zweiten Anschlusspunkt 9, geführt, angeordnet ist. Der zweite Anschlusspunkt 9 ist relativ zum ersten Anschlusspunkt 8 über einen Verfahrweg V zwischen einer Auslenkposition (Figuren 3, 4 und 5) in der der Strang 3 ausgefahren ist und einer Rückstellposition (Figuren 1, 2 und 6), in der der Strang 3 eingefahren ist, hin- und her verfahrbar.

Das Führungssystem 1 weist ferner eine Rückstellvorrichtung 10 zur hier automatischen Rückstellung des Stranges 3 in die Rückholposition hinein auf. Die Rückstellvorrichtung 10 weist eine Umlenkführung 11 mit einem Umlenkelement 12 auf. Das Umlenkelement 12 ist als Umlenkrolle 13 ausgebildet, wobei die Umlenkrolle 13 um eine Drehachse d senkrecht zu einer Bogenebene E, in der der Umlenkbogen 5 angeordnet ist, frei drehbar gelagert ist. An der Umlenkrolle 13 liegt der Umlenkbogen 5 zu seiner Führung über den Verfahrweg v des zweiten Anschlusspunktes 9 rollverschieblich seitlich an. Das Umlenkelement 12 ist zumindest mit einer Wegkomponente in Richtung des Verfahrweges v ortsveränderlich zur Basis 2 zwischen der Auslenkposition und der Rückholposition hin- und her verfahrbar angeordnet. Wie aus der Mechanik von Umlenkrollen bekannt und in Figur 3b skizzenhaft angedeutet, ist der Verfahrweg v des zweiten Anschlusspunktes 9 doppelt so groß wie der Weg w, den die Umlenkrolle 13 beim Verfahren des ersten Anschlusspunktes 9 durchläuft. Somit kann über den Weg w der Umlenkrolle zugleich ein maximaler Verfahrweg v eingestellt werden.

Die Umlenkrolle 13 weist eine seitliche Führungsfläche 14 für den Umlenkbogen 5 auf. Die seitliche Führungsfläche 14 ist der Außenkontur des Umlenkbogens 5 angepasst, d.h. hier, entsprechend dem kreisförmigen Querschnitt des Stranges 3, konkav halbkreisförmig ausgebildet.

Zur automatischen Rückstellung des Umlenkelementes 12 in seine Rückstellposition hinein ist eine Kraftvorrichtung 17 zur Erzeugung und Einleitung einer Rückstellkraft in das Umlenkelement 12 vorgesehen.

Wie aus den Figuren 1 bis 5 hervorgeht, wird das Umlenkelement 12 auf einem linearen Weg w verfahren, der parallel zum Verfahrweg v des zweiten Antriebspunktes 9 angeordnet ist. Hierzu greift die Umlenkrolle 13 mit seiner Drehachse d in eine Führungsschiene 21 mit einem hier nicht sichtbaren Anker gleitverschieblich ein. Zur Einhaltung der Rückholkraft ist hier ein pneumatischer Druckzylinder 22 vorgesehen, der mit seinem Druckstempel 23 an dem hier nicht ersichtlichen Anker der D-Achse d angreift. Der Druckzylinder 20 ist, was hier nicht dargestellt ist, über die Steuerungs- und Regelungseinheit steuerbar. Somit kann, was ebenfalls den Figuren nicht entnehmbar ist, die Ansteuerung des Druckzylinders 22 mit der Bewegung des Armes A des Roboters E koordiniert und/oder über eine Druckmessung des Anpressdruckes des Umlenkbogens 5 an dem Umlenkelement 12 gesteuert oder geregelt werden. Über eine Verfahrlänge des Druckstempels 23 aus dem Druckzylinder 22 kann zudem die Begrenzungen des Weges w für das Verfahren des Umlenkelementes 12 eingestellt werden.

Bei dem in der Zeichnung dargestellten Ausführungsbeispiel des Führungssystems 1 ist ein an der Basis 2 klappbar angelenkter Deckel vorgesehen. Beide Trume 6, 7 des Ausgleichsabschnitts sind endseitig zum Anschluss beispielsweise an weitere Teile des Stranges 3 oder, wie in Figuren 6, zum Anschluss an ein Arbeitsende B des Armes A, von außen an von Basis 2 und Deckel begrenzte Öffnungen erreichbar. Beide Öffnungen 25 umrahmen jeweils ein zur Basis 2 stationäres ringartiges Führungselement 26, wobei das Führungselement 26 für den ersten Anschlusspunkt 8 zugleich als stationäre Halterung dient, während das andere Führungselement 26 als Gleitring ausgebildet ist, durch welchen das Trum 7 mit dem bewegbaren Anschlusspunkt 9 gleitverschieblich geführt ist. Zur Festlegung des Führungssystems 1 an dem Industrieroboter I sind unterseitig der Basis 2 Halterungsmittel 27 vorgesehen.

### Bezugszeichenliste

- 1: Führungssystem
- 2: Basis
- 3: Strang
- 3.1: Innenraum
- 4: Ausgleichsabschnitt
- 5: Umlenkbogen
- 6: Trum
- 7: Trum
- 8: erster Anschlusspunkt
- 9: zweiter Anschlusspunkt
- 10: Rückstellvorrichtung
- 11: Umlenkführung
- 12: Umlenkelement
- 13: Umlenkrolle
- 14: Führungsfläche
- 17: Kraftvorrichtung
- 21: Führungsschiene
- 22: Druckzylinder
- 23: Druckstempel
- 26: Führungselement
- 27: Halterungsmittel
- A: Arm
- B: Arbeitsende
- E: Bogenebene
- I: Industrieroboter
- d: Drehachse
- v: Verfahrweg
- w: Weg

## Patentansprüche

1. Führungssystem (1) für Versorgungsleitungen für ein Handhabungsgerät, insbesondere für einen Industrieroboter (I), mit einer Basis (2) und einem ketten- oder schlauchartigen Strang (3) mit kreisförmigem Querschnitt, in oder an dem die Versorgungsleitungen anordenbar sind, wobei der Strang (3) zum Längenausgleich in einem Ausgleichsabschnitt (4) in zwei über einen Umlenkbogen (5) miteinander verbundenen Trumen (6, 7) mit jeweils einem endseitigen Anschlusspunkt, einem zu der Basis (2) des Führungssystems (1) stationären ersten Anschlusspunkt (8) und einem zu der Basis (2) bewegbaren zweiten Anschlusspunkt (9), geführt angeordnet ist, der zweite Anschlusspunkt (9) relativ zum ersten Anschlusspunkt (8) über einen Verfahrweg (v) zwischen einer Auslenkposition, in der der Strang (3) ausgefahren ist, und einer Rückstellposition, in der der Strang (3) eingefahren ist, hin und her verfahrbar ist, wobei das Führungssystem (1) eine Rückstellvorrichtung (10) zur Rückstellung des Stranges (3) in die Rückstellposition hinein aufweist, die eine Umlenkungsführung (11) mit einem Umlenkelement (12) aufweist, an dem sich der Umlenkbogen (5) zu seiner Führung über den Verfahrweg (v) seitlich abstützt, das Umlenkelement (12) mit zumindest einer Wegkomponente in Richtung des Verfahrweges (v) ortsveränderlich zur Basis (2) zwischen der Auslenkposition und der Rückstellposition hin und her verfahrbar angeordnet ist, und eine seitliche Führungsfläche (14) für den Umlenkbogen (5) aufweist, die sich zumindest etwa senkrecht zu einer Bogenebene (E) erstreckt, in der der Umlenkbogen (5) angeordnet ist, **dadurch gekennzeichnet, dass** das Umlenkelement (12) als Umlenkrolle (13) ausgebildet ist, die senkrecht zur Bogenebene (E) drehbar zur Basis (2) gelagert ist und an der der Umlenkbogen (5) mit einem Mittelpunktswinkel von 180° seitlich anliegt, dass die Rückstellvorrichtung (10) eine lineare Führungsschiene (21) für die Umlenkrolle (13) aufweist, und dass die seitliche Führungsfläche (14) der Umlenkrolle (13) entsprechend dem kreisförmigen Querschnitt des Strangs (3) konkav halbkreisförmig ausgebildet ist.

2. Führungssystem nach Anspruch 1, **dadurch**
**gekennzeichnet, dass** die Rückstellvorrichtung (10) zur automatischen Rückstellung eine Kraftvorrichtung (17) zur Einleitung einer Rückstellkraft in die Umlenkrolle (13) aus der Auslenkposition in die Rückstellposition hinein aufweist.

3. Führungssystem nach Anspruch 2, **dadurch**
**gekennzeichnet, dass** die Einleitung der Rückstellkraft pneumatisch, magnetisch, elektromagnetisch und/oder mechanisch, insbesondere federmechanisch erfolgt.

4. Führungssystem nach einem der Ansprüche 1 bis 3,
**dadurch gekennzeichnet, dass** die Umlenkrolle (13) unter Vorspannung in der Rückstellposition angeordnet ist.

5. Führungssystem nach einem der Ansprüche 1 bis 4,
**dadurch gekennzeichnet, dass** das Trum (7) mit dem zweiten Anschlusspunkt (9) durch ein zur Basis (2) stationäres Führungselement (26), insbesondere durch einen Gleitring, unter gleit- oder rollverschieblicher seitlichen Anlage an demselben geführt angeordnet ist.

6. Führungssystem nach einem der Ansprüche 1 bis 5,
**dadurch gekennzeichnet, dass** die Höhe und/oder Änderung der Rückstellkraft gesteuert oder geregelt ist.

7. Führungssystem nach einem der Ansprüche 1 bis 6,
**dadurch gekennzeichnet, dass** eine Messvorrichtung mit einem Sensor zur Erfassung der Rückstellkraft, der Ortsveränderung der Umlenkrolle (13) und/oder eines Anpressdruckes, mit dem der Umlenkbogen (5) an der Umlenkrolle (13) anliegt, vorgesehen ist.

8. Führungssystem nach Anspruch 7, da durch
**gekennzeichnet**, **dass** die Erfassung der Ortsveränderung der Umlenkrolle (13) berührungslos erfolgt.

9. Führungssystem nach Anspruch 7 oder 8, **dadurch**
**gekennzeichnet, dass** der Sensor ein Signal zur Steuerung oder Regelung der Rückstellkraft erzeugt.

10. Führungssystem nach einem der Ansprüche 7 bis 9,
**dadurch gekennzeichnet, dass** die Sensoren ein Signal erzeugen, dass zur Steuerung des Handhabungsgerätes, insbesondere zur Notabschaltung des Handhabungsgerätes, einsetzbar ist.

11. Führungssystem nach einem der Ansprüche 1 bis 10,
**dadurch gekennzeichnet, dass** es ein Gehäuse mit Deckel zum Schutz aufweist.

12. Führungssystem nach einem der Ansprüche 1 bis 11,
**dadurch gekennzeichnet, dass**
die Umlenkrolle (13) mit ihrer Drehachse (d) mit einem Anker gleitverschieblich in die lineare Führungsschiene (21) eingreift.

13. Handhabungsgerät, insbesondere Industrieroboter (I), mit einem Führungssystem (1) für Versorgungsleitungen gemäß einem der Ansprüche 1 bis 12 und mit einer Basis (2) sowie mit einem ketten-, schlauch- oder bandartigen Strang (3), in oder an dem die Versorgungsleitungen anordenbar sind.

14. Handhabungsgerät, insbesondere Industrieroboter (I), nach Anspruch 13, wobei der Strang (3) zum Längenausgleich in einem Ausgleichsabschnitt (4) in zwei über einen Umlenkbogen (5) miteinander verbundenen Trumen (6, 7) mit jeweils einem endseitigen Anschlusspunkt, einem zu der Basis (2) des Führungssystems (1) stationären ersten Anschlusspunkt (8) und einem zu der Basis (2) bewegbaren zweiten Anschlusspunkt (9), geführt angeordnet ist, der zweite Anschlusspunkt (9) relativ zum ersten Anschlusspunkt (8) über einen Verfahrweg (v) zwischen einer Auslenkposition, in der der Strang (3) ausgefahren ist, und einer Rückstellposition, in der Strang (3) eingefahren ist, hin und her verfahrbar ist, das Führungssystem (1) eine Rückstellvorrichtung (10) zur Rückstellung des Stranges (3) in die Rückstellposition hinein aufweist, die Rückstellvorrichtung (10) eine Umlenkungsführung (11) mit einer Umlenkrolle (13) aufweist, an der sich der Umlenkbogen (5) zu seiner Führung über den Verfahrweg (v) seitlich abstützt, und das Führungssystem (1) eine Messvorrichtung mit einem Messsignale erzeugenden Sensor zur Erfassung der Rückstellkraft, der Ortsveränderung der Umlenkrolle (13) und/oder eines Anpressdruckes, mit dem der Umlenkbogen (5) an der Umlenkrolle (13) anliegt, aufweist, **dadurch gekennzeichnet, dass** die Messsignale mit einer vorgesehenen Steuerung oder Regelung des Handhabungsgerätes bzw. Industrieroboters (I) verknüpfbar sind.

## Claims

1. A guide system (1) for supply lines for a handling apparatus, in particular for an industrial robot (I), comprising a base (2) and a chain-like or hose-like carrier member (3) with circular cross-section, in or on which the supply lines can be arranged, wherein the carrier member (3) is arranged guided for length compensation purposes in a compensating portion (4) in two runs (6, 7) connected together by way of a direction-changing bend (5) with respective end connecting points, a first connecting point (8) which is stationary relative to the base (2) of the guide system (1) and a second connecting point (9) which is movable relative to the base (2), the second connecting point (9) is reciprocable relative to the first connecting point (8) over a displacement travel (v) between a deflection position in which the carrier member (3) is extended and a return position in which the carrier member (3) is retracted, and the guide system (1) having a return device (10) for returning the carrier member (3) into the return position, the return device (10) having a direction-changing guide (11) with a direction-changing element (12) at which the direction-changing bend (5) is supported laterally for guidance thereof over the displacement travel (v), the direction-changing element (12) is arranged reciprocably in variable-position relationship with at least one travel component in the direction of the displacement travel (v) relative to the base (2) between the deflection position and the return position, and has a lateral guide surface (14) for the direction-changing bend (5), which surface extends at least approximately perpendicularly to a bend plane (E) in which the direction-changing bend (5) is arranged, **characterised in that** the direction-changing element (12) is in the form of a direction-changing roller (13), which is mounted perpendicularly to the bend plane (E) rotatably relative to the base (2) and against which the direction-changing bend (5) rests laterally with a centre angle of 180°, that the return device (10) has a linear guide rail (21) for the direction-changing roller (13) and that the lateral guide surface (14) of the direction-changing roller (13) is of concave semi-circular cross-section corresponding to the circular cross-section of the carrier member (3).

2. A guide system according to claim 1 **characterised in that** the return device (10) for automatic return has a force device (17) for applying a return force to the direction-changing roller (13) from the deflection position to the return position.

3. A guide system according to claim 2 **characterised in that** the return force is applied pneumatically, magnetically, electromagnetically and/or mechanically, in particular spring-mechanically.

4. A guide system according to one of claims 1 to 3 **characterised in that** the direction-changing roller (13) is arranged in a prestressed condition in the return position.

5. A guide system according to one of claims 1 to 4 **characterised in that** the run (7) with the second connecting point (9) is arranged guided through a guide element (26) which is stationary relative to the base (2), in particular through a slide ring, bearing laterally thereagainst in slidingly displaceable or rollingly displaceable relationship.

6. A guide system according to one of claims 1 to 5 **characterised in that** the magnitude of and/or the change in the return force is controlled or regulated.

7. A guide system according to one of claims 1 to 6 **characterised in that** there is provided a measuring device having a sensor for detecting the return force, the change in location of the direction-changing roller (13) and/or a pressing pressure with which the direction-changing bend (5) bears against the direction-changing roller (13).

8. A guide system according to claim 7 **characterised in that** the detection of the change in location of the direction-changing roller (13) is effected contact-lessly.

9. A guide system according to claim 7 or claim 8 **characterised in that** the sensor produces a signal for controlling or regulating the return force.

10. A guide system according to one of claims 7 to 9 **characterised in that** the sensors produce a signal which can be used for controlling the handling apparatus, in particular for emergency shut-down of the handling apparatus.

11. A guide system according to one of claims 1 to 10 **characterised in that** the guide system has a housing with a cover for protection purposes.

12. A guide system according to one of claims 1 to 11 **characterised in that** the direction-changing roller (13) engages with its axis of rotation (d) with an anchor into the guide rail (21) in a slidingly displaceable manner.

13. A handling apparatus, in particular an industrial robot (I) having a guide system (1) for supply chains according to one of claims 1 to 12 and a base (2) as well as a chain-like, hose-like or strip-like carrier member (3), in or on which the supply lines can be arranged.

14. A handling apparatus, in particular an industrial robot (I), according to claim 13, wherein the carrier member (3) is arranged guided for length compensation purposes in a compensating portion (4) in two runs (6, 7) connected together by way of a direction-changing bend (5) with respective end connecting points, a first connecting point (8) which is stationary relative to the base (2) of the guide system (1) and a second connecting point (9) which is movable relative to the base (2), the second connecting point (9) is reciprocable relative to the first connecting point (8) over a displacement travel (v) between a deflection position in which the carrier member (3) is extended and a return position in which the carrier member (3) is retracted, and the guide system (1) having a return device (10) for returning the carrier member (3) into the return position, the return device (10) having a direction-changing guide (11) with a direction-changing roller (13) at which the direction-changing bend (5) is supported laterally for guidance thereof over the displacement travel (v), and the guide system (1) has a measuring device with a sensor producing measurement signals for detection of the return force, the change in location of the direction-changing roller (13) and/or a pressing pressure with which the direction-changing bend (5) bears against the direction-changing roller (13), **characterised in that** the measuring signals can be linked to a provided control or regulation of the handling apparatus or industrial robot (I).

## Revendications

1. Système de guidage (1) pour des lignes d'alimentation pour un appareil de manipulation, en particulier pour un robot industriel (I), avec une base (2) et une ligne (3) en forme de chaîne ou de tuyau avec une section transversale circulaire, dans ou sur laquelle les lignes d'alimentation peuvent être disposées, la ligne (3) étant, pour la compensation de la longueur dans une section de compensation (4), disposée de manière guidée en deux brins (6, 7) reliés l'un à l'autre par un coude de renvoi (5) et comportant chacun un point de raccordement d'extrémité, un premier point de raccordement (8) stationnaire par rapport à la base (2) du système de guidage (1) et un deuxième point de raccordement (9) mobile par rapport à la base (2), le deuxième point de raccordement (9) peut être déplacé en va-et-vient par rapport au premier point de raccordement (8) sur une course de déplacement (v) entre une position de déviation, dans laquelle la ligne (3) est sortie, et une position de rappel, dans laquelle la ligne (3) est rentrée, le système de guidage (1) présentant un dispositif de rappel (10) pour le rappel de la ligne (3) dans la position de rappel, qui présente un guide de renvoi (11) avec un élément de renvoi (12), sur lequel l'arc de renvoi (5) s'appuie latéralement pour son guidage sur la course de déplacement (v), l'élément de renvoi (12) est disposé de manière à pouvoir être déplacé en va-et-vient avec au moins une composante de course dans la direction de la course de déplacement (v), de manière à pouvoir changer de position par rapport à la base (2) entre la position de déviation et la position de rappel, et présente une surface de guidage latérale (14) pour l'arc de renvoi (5), qui s'étend au moins à peu près perpendiculairement à un plan d'arc (E) dans lequel est disposé l'arc de renvoi (5), **caractérisé en ce que** l'élément de renvoi (12) est réalisé sous forme de poulie de renvoi (13), qui est logé perpendiculairement au plan de l'arc (E) de manière à pouvoir tourner par rapport à la base (2) et contre lequel l'arc de renvoi (5) s'applique latéralement avec un angle au centre de 180°, **en ce que** le dispositif de rappel (10) présente un rail de guidage linéaire (21) pour la poulie de renvoi (13) et la surface de guidage latérale (14) de la poulie de renvoi (13) a une forme semi-circulaire concave correspondant à la section transversale circulaire de la ligne (3).

2. Système de guidage selon la revendication 1, **caractérisé en ce que** le dispositif de rappel (10) pour le rappel automatique présente un dispositif de force (17) pour l'introduction d'une force de rappel dans la poulie de renvoi (13) depuis la position de déviation vers la position de rappel.

3. Système de guidage selon la revendication 2, **caractérisé en ce que** l'application de la force de rappel est pneumatique, magnétique, électromagnétique et/ou mécanique, notamment par ressort.

4. Système de guidage selon l'une des revendications 1 à 3, **caractérisé en ce que** la poulie de renvoi (13) est disposée sous précontrainte dans la position de rappel.

5. Système de guidage selon l'une des revendications 1 à 4, **caractérisé en ce que** le brin (7) est disposé avec le deuxième point de raccordement (9) de manière guidée par un élément de guidage (26) stationnaire par rapport à la base (2), en particulier par une bague de glissement, avec un appui latéral coulissant ou déplaçable par galet sur celui-ci.

6. Système de guidage selon l'une des revendications 1 à 5, **caractérisé en ce que** la valeur et/ou la variation de la force de rappel est commandée ou régulée.

7. Système de guidage selon l'une des revendications 1 à 6, **caractérisé en ce qu'**il est prévu un dispositif de mesure comportant un capteur pour détecter la force de rappel, la variation de position de la poulie de renvoi (13) et/ou une pression d'appui avec laquelle l'arc de renvoi (5) est en contact avec la poulie de renvoi (13).

8. Système de guidage selon la revendication 7, **caractérisé en ce que** la détection du changement de position de la poulie de renvoi (13) est effectuée sans contact.

9. Système de guidage selon la revendication 7 ou 8, **caractérisé en ce que** le capteur génère un signal de commande ou de régulation de la force de rappel.

10. Système de guidage selon l'une des revendications 7 à 9, **caractérisé en ce que** les capteurs génèrent un signal utilisable pour la commande du dispositif de manipulation, notamment pour l'arrêt d'urgence du dispositif de manipulation.

11. Système de guidage selon l'une des revendications 1 à 10, **caractérisé en ce qu'**il comporte un boîtier avec couvercle pour le protéger.

12. Système de guidage selon l'une des revendications 1 à 11, **caractérisé en ce que** la poulie de renvoi (13) s'engage par son axe de rotation (d) avec une ancre dans le rail de guidage (21) de manière à pouvoir coulisser.

13. Appareil de manipulation, en particulier robot industriel (I), avec un système de guidage (1) pour des lignes d'alimentation selon l'une des revendications 1 à 12 et une base (2) ainsi qu'une ligne (3) en forme de chaîne, de tuyau ou de bande, dans ou sur laquelle les lignes d'alimentation peuvent être disposées.

14. Appareil de manipulation, en particulier robot industriel (I), selon la revendication 13, dans lequel la ligne (3) étant, pour la compensation de la longueur dans une section de compensation (4), disposée de manière guidée en deux brins (6, 7) reliés l'un à l'autre par un coude de renvoi (5) et comportant chacun un point de raccordement d'extrémité, un premier point de raccordement (8) stationnaire par rapport à la base (2) du système de guidage (1) et un deuxième point de raccordement (9) mobile par rapport à la base (2), le deuxième point de raccordement (9) peut être déplacé en va-et-vient par rapport au premier point de raccordement (8) sur une course de déplacement (v) entre une position de déviation, dans laquelle la ligne (3) est sortie, et une position de rappel, dans laquelle la ligne (3) est rentrée, le système de guidage (1) présentant un dispositif de rappel (10) pour le rappel de la ligne (3) dans la position de rappel, le dispositif de rappel (10) présente un guide de renvoi (11) avec une poulie de renvoi (13), sur laquelle l'arc de renvoi (5) s'appuie latéralement pour son guidage sur la course de déplacement (v), et le système de guidage (1) présente un dispositif de mesure comportant un capteur générant des signaux de mesure pour détecter la force de rappel, la variation de position de la poulie de renvoi (13) et/ou une pression d'appui avec laquelle l'arc de renvoi (5) est en contact avec la poulie de renvoi (13), **caractérisé en ce que** les signaux de mesure peuvent être reliés à une commande ou à une régulation prévue du manipulateur ou du robot industriel (I).
